Europäisches Patentamt

European Patent Office

Office européen des brevets

(11) Veröffentlichungsnummer: **0 039 068**
**B1**

(12) # EUROPÄISCHE PATENTSCHRIFT

(45) Veröffentlichungstag der Patentschrift:
21.11.84

(51) Int. Cl.³: **F 16 J 15/02, F 16 L 21/00**

(21) Anmeldenummer: **81103136.8**

(22) Anmeldetag: **27.04.81**

(54) **Abdichtung für Profilbauteile.**

(30) Priorität: **26.04.80 DE 3016161**

(43) Veröffentlichungstag der Anmeldung:
**04.11.81 Patentblatt 81/44**

(45) Bekanntmachung des Hinweises auf die Patenterteilung:
**21.11.84 Patentblatt 84/47**

(84) Benannte Vertragsstaaten:
**AT BE CH FR LI NL**

(56) Entgegenhaltungen:
**CH - A - 103 496**
**CH - A - 366 428**
**DE - A - 1 484 860**
**DE - A - 2 541 968**
**DE - C - 880 677**
**DE - U - 1 725 132**
**DE - U - 1 900 435**
**FR - A - 1 266 568**
**GB - A - 310 456**

(73) Patentinhaber: **Berlemann, Rudolf, Am Jägerhaus,**
**D-4404 Telgte (DE)**

(72) Erfinder: **Berlemann, Rudolf, Am Jägerhaus,**
**D-4404 Telgte (DE)**

(74) Vertreter: **Habbel, Hans-Georg, Dipl.-Ing.,**
**Postfach 3429 Am Kanonengraben 11, D-4400 Münster**
**(DE)**

## Beschreibung

Die Erfindung bezieht sich auf eine Abdichtung für vorzugsweise aus Beton bestehende Profilbauteile gemäß dem Oberbegriff des Patentanspruches.

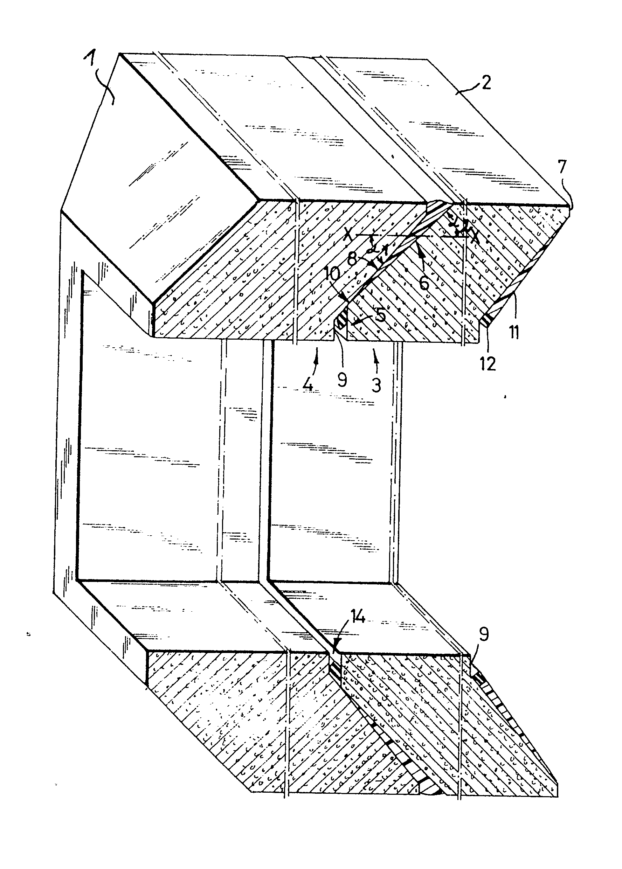

In der CH-A-103 496 wird in Fig. 3 eine gattungsgemäße Anordnung beschrieben, bei welcher die Schrägfläche des Muffenendes und die Schrägfläche des Spitzendes ungleiche Neigungen gegenüber den Radialabschnitten aufweisen, wobei zwischen den inneren Radialabschnitten des Muffenendes und des Spitzendes eine Dichtung eingepaßt wird, die sich beim Zusammenschieben der beiden Profilbauteile zusammenpreßt und teilweise in den Fugenraum zwischen den beiden Schrägflächen eintreten kann. Die Profilbauteile liegen im eingebauten Zustand unter Zwischenschaltung dieser Dichtung aneinander an. Durch den durch die Dichtmasse oder die Dichtung eingenommenen Raum zwischen den inneren Radialflächen wird gleichzeitig eine Fuge zwischen den Schrägflächen und den äußeren Radialflächen bedingt, die ein Verkanten der miteinander zu verbindenden Profilbauteile ermöglicht und deren Ausfüllung mit einer Dichtmasse später nur schwierig möglich ist.

Das nachträgliche Ausfüllen der im Bereich der äußeren Radialabschnitte gebildeten Nut durch einen Dichtring, der beispielsweise auch mit einer dauerelastischen Dichtmasse verklebt werden kann, ist unzureichend, da es durchaus möglich ist, daß der Dichtring unzuverlässig eingebracht wird, so daß sich Kanäle bilden können, durch die entweder Flüssigkeit von außen nach innen oder von innen nach außen durchtreten kann, was unerwünscht ist.

In den Fig. 1, 2 und 4 der CH-A-103 496 wird eine Anordnung beschrieben, bei welcher die Schrägfläche des Muffenendes und die Schrägfläche des Spitzendes unterschiedliche Neigungen aufweisen, wobei sich aber im Verbindungsbereich Hohlräume ergeben können, die unkontrollierbar sind. Ein nachträgliches Ausfüllen der dann stufenförmig ausgebildeten Verbindung bereitet ebenfalls Schwierigkeiten, weil das Dichtmittel um die Ecke geführt werden muß, wobei sich hier wiederum Hohlräume ausbilden können, die nicht kontrolliert werden können.

Der Erfindung liegt die Aufgabe zugrunde, eine Abdichtung für Profilbauteile zu schaffen, bei denen nach außen hin kontrolliert werden kann, ob die Dichtfuge ordnungsgemäß ausgefüllt ist, wobei weiterhin sichergestellt werden soll, daß zwangsläufig beim Zusammenziehen oder Zusammenschieben der beiden Bauteile ein vollständiges Abdichten zwischen den beiden Bauteilen erreicht wird, zusätzliche Nachdichtungen problemlos möglich sind und Freiräume im Verbindungsbereich mit Sicherheit ausgeschaltet sind.

Diese der Erfindung zugrundeliegende Aufgabe wird durch die Merkmale des kennzeichnenden Teiles des Hauptanspruches gelöst.

Durch die erfindungsgemäße Gestaltung der zusammenwirkenden Flächen wird erreicht, daß sich die Rohre beim Zusammenziehen zentrieren und die auf dem einen Rohr aufgebrachte Dichtmasse durch das Zusammenziehen so verpreßt wird, daß ein Einpressen dieser Dichtmasse hohlraumlos in die Fugenräume sichergestellt ist.

Die Grenze des Zusammenschiebens der beiden Rohre wird durch eine linienförmige Anlage der einen Kante des einen Rohres an der Fläche des anderen Rohres sichergestellt, wobei dadurch auch ein hohes Verpressen der Dichtmasse in diesem Bereich erreicht wird, ohne daß ein Hohlraum gebildet wird und ohne daß bei einem zu hohen Zusammenpreßdruck die Dichtung beschädigt werden könnte.

Außerdem wird erreicht, daß in diesem sich von beiden Seiten zum Wandinneren hin verjüngenden Dichtraum jede eingebrachte Dichtmasse positiven Druck erhält, d. h. die Dichtmasse wird bei Wasser- bzw. Flüssigkeitsdruck von außen gleich wie von innen mit entsprechendem Druck unausweichlich verpreßt und somit zusätzlich verdichtet.

Ein Ausführungsbeispiel der Erfindung wird nachfolgend anhand der Zeichnung erläutert.

Die beiden miteinander zu verbindenden Profilbauteile sind mit 1 und 2 bezeichnet und in dem dargestellten Ausführungsbeispiel sind diese Profilbauteile als Rahmenprofile dargestellt, jedoch können selbstverständlich auch Rohre oder andere sonstige Elemente eingesetzt werden (z. B. Wandelemente).

Die zusammenwirkenden Stirnkanten der Profilbauteile 1 und 2 sind in der Zeichnung als Spitzende 3 und Muffenende 4 zur Verdeutlichung der nachfolgenden Beschreibung bezeichnet.

Das Spitzende 3 weist dabei einen sich an die Innenwand anschließenden Radialabschnitt 5 auf, d. h. einen Abschnitt, der eine gerade Stirnfläche bildet, die im wesentlichen senkrecht zur Längsachse des Profilbauteiles steht. An das innere Ende dieses Radialabschnittes 5 schließt sich eine Schrägfläche 6 an, die durchläuft bis zur Außenwandung des Profilbauteiles und dabei mit der Längsachse X-X einen Winkel $\alpha 2$ einschließt, der kleiner als 90° ist (vorzugsweise etwa 50°).

Das Muffenende 4 weist außen beginnend einen Radialabschnitt 7 auf, der vorzugsweise senkrecht zur Längsachse oder zur Außenfläche des Profilbauteiles steht.

An den Radialabschnitt 7 schließt sich eine Schrägfläche 8 an, die im Abstand vor der Innenwandung des Profilbauteiles endet und gegenüber der Längsachse X-X einen Neigungswinkel $\alpha 1$ aufweist, der größer als der Neigungswinkel $\alpha 2$ (vorzugsweise etwa 55°) ist, so daß die beiden Schrägflächen 6 und 8 nicht parallel zueinander, sondern im Winkel zueinander stehen.

An das Ende der Schrägfläche 8 schließt sich ein Radialabschnitt 9 an, der senkrecht auf der Innenwandung des Profilbauteiles mündet oder senkrecht zur Längsachse X-X steht.

Durch die Wahl des Winkels $\alpha$ 1 und die Größe der Radialabschnitte 5 wird eine Kontaktlinie 10 geschaffen, die beim Zusammenziehen der beiden Profilbauteile als erstes und einziges mit der Schrägfläche 8 in Kontakt kommt, so daß hier eine »Knirschanlage« geschaffen wird.

Mit 11 ist eine auf die Schrägfläche 8 des Muffenendes 4 aufgetragene plastische Dichtmasse bezeichnet.

Bei der Darstellung in der Zeichnung ist zusätzlich ein elastischer Dichtungskörper 12 eingezeichnet, der in oder an die Schrägfläche 8 eingesetzt wird und beispielsweise das Herausdrücken der Dichtmasse 11 nach Innen beim Zusammenziehen der Profilbauteile so, wie dies in der Zeichnung für die Muffenenden 3 und 4 dargestellt ist, verhindert würde.

Es ist erkennbar, daß beim Zusammenziehen der beiden Profilbauteile ein Verpressen der Dichtmasse 11 erfolgt, so daß eine ausreichende Abdichtung mit Sicherheit erreicht wird.

Zusätzlich kann der Raum, der zwischen den beiden Schrägflächen 6 und 8 gebildet wird, über einen Gießkanal nach außen oder innen zu dem Profilbauteil hin geöffnet sein, so daß ein nachträgliches Einpressen von Dichtungsmasse möglich ist.

Anschließend an das Zusammensetzen der beiden Profilbauteile 1 und 2 kann die dann offene Fuge 14 mit bekannten Mitteln verschlossen werden.

### Patentansprüche

1. Abdichtung für vorzugsweise aus Beton bestehende Profilbauteile (1, 2) unter Verwendung einer plastischen und/oder elastischen Dichtung (11, 12) mit einem Muffenende (4) aus je einem innen und außen liegenden Radialabschnitt (7, 9) und einer diese beiden Radialabschnitte verbindenden Schrägfläche (8) und einem Spitzende (3) aus einem inneren Radialabschnitt (5), an den sich eine Schrägfläche (6) anschließt, wobei die beiden Schrägflächen (6, 8) gegenüber der Längsachse der Profilbauteile (1, 2) unterschiedliche Neigungswinkel derart aufweisen, daß der Neigungswinkel ($\alpha$ 2) des Spitzendes (3) kleiner als der Neigungswinkel ($\alpha$ 1) des Muffenendes (4) ist, dadurch gekennzeichnet, daß die Schrägfläche (6) des Spitzendes (3) bis zur Außenwandung des Spitzendes (3) führt und die Länge des Radialabschnittes (5) des Spitzendes (2) größer als die des Radialabschnittes (9) des Muffenendes (1) ist.

2. Abdichtung nach Anspruch 1, dadurch gekennzeichnet, daß in die Schrägfläche (8) ein über diese vorspringender elastischer Dichtungskörper (12) eingearbeitet oder aufgeklebt ist.

3. Abdichtung nach Anspruch 1, dadurch gekennzeichnet, daß die plastische und/oder elastische Dichtmasse (11) zwischen Spitzende (3) und Muffenende (4) werkseitig bei der Herstellung der Profilbauteile (1, 2) aufgebracht ist.

### Claims

1. Seal for profile-section components (1, 2), composed preferably of concrete, this seal employing plastic jointing (11) and/or a resilient gasket (12) with a socket end (4) which, in each case, is composed of radial portions (7, 9) which are located on the outside and on the inside, and of an inclined surface (8) connecting these two radial portions, and with a spigot end (3) which is composed of an inner radial portion (5), to which an inclined surface (6) is contiguous, the two inclined surfaces (6, 8) having different angles of inclination with respect to the longitudinal axis of the profile-section components (1, 2), such that the angle of inclination ($\alpha$ 2) of the spigot end (3) is smaller than the angle of inclination ($\alpha$ 1) of the socket end (4), characterised in that the inclined surface (6) of the spigot end (3) leads as far as the outer wall-surface of the spigot end (3), and the length of the radial portion (5) of the spigot end (2) exceeds that of the radial portion (9) of the socket end (4).

2. Seal according to claim 1, characterised in that a resilient gasket (12) is incorporated into the inclined surface (8) or is fixed thereon by means of an adhesive, this gasket (12) standing proud of this surface (8).

3. Seal according to claim 1, characterised in that the plastic and/or resilient jointing compound (11), which is located between the spigot end (3) and the socket end (4), is factory-applied during the manufacture of the profile-section components (1, 2).

### Revendications

1. Dispositif d'étanchéité pour éléments profilés (1, 2), de préférence en béton, utilisant une garniture d'étanchéité plastique et/ou élastique (11, 12), qui présente une extrémité manchon (4) composée de segments radiaux intérieur et extérieur (7, 9), et d'une surface oblique (8) qui joint ces deux segments radiaux, et une extrémité pointe (3), composée d'un segment radial intérieur (5), auquel fait suite une surface oblique (6), les deux surfaces obliques (6, 8) présentant des angles de pente différents par rapport à l'axe longitudinal (X-X) des éléments profilés (1, 2), l'angle de pente ($\alpha$ 2) de l'extrémité pointe (3) étant plus petit que l'angle de pente ($\alpha$ 1) de l'extrémité manchon (4), charactérisé en ce que la surface oblique (6) de l'extrémité pointe (3) s'étend jusqu'à la paroi extérieure de l'extrémité pointe (3) et que la longueur du segment radial (5) de l'extrémité pointe (3) est plus grande que le segment radial (9) de l'extrémité manchon (1).

2. Dispositif d'étanchéité selon la revendication 1, caractérisé en ce que, dans la surface oblique (8) est encastré ou collé un corps d'étanchéité élastique (12) qui fait saillie au-dessus de cette surface.

3. Dispositif d'étanchéité selon la revendication 1, caractérisé en ce que la masse d'etanchéité plastique et/ou élastique (11) est disposée entre l'extrémité pointe (3) et l'extrémité manchon (4), du côté actif, au moment de la fabrication des éléments profilés (1, 2).

4